# EUROPÄISCHE PATENTSCHRIFT

(11) **EP 0 480 095 B1**
(45) Veröffentlichungstag und Bekanntmachung des Hinweises auf die Patenterteilung: **23.12.1998**
(21) Anmeldenummer: 90119633.7
(22) Anmeldetag: 12.10.1990
(51) Int. Cl.: G06F 9/38

(54) **Vorrichtung zur Befehlsbereitstellung in einem Mikroprozessor**
Instruction fetch apparatus in a microprocessor
Dispositif d'appel d'instruction dans un microprocesseur

(43) Veröffentlichungstag der Anmeldung: 15.04.1992
(73) Patentinhaber: SIEMENS AKTIENGESELLSCHAFT, 80333 München (DE)
(72) Erfinder: Poret, Mark, W-8000 München 80 (DE); Fleck, Rod, W-8000 München 80 (DE); Mattheis, Karl-Heinz, Dipl.-Ing., W-8011 Forstinning (DE); Meinhold, Christoph, Dipl.-Ing., W-8033 Planegg (DE); Javier, Magana, Austin, Texas 78727 (US)

(56) Entgegenhaltungen:
- EP-A- 0 135 844
- US-A- 4 912 635
- THE 11TH ANNUAL INTERNATIONAL SYMPOSIUM ON COMPUTER ARCHITECTURE, Ann Arbor, Michigan, 5. - 7. Juni 1984, Seiten 119-125, IEEE, New York, US; R.G. WEDIG et al.: "The reduction of branch instruction execution overhead using structured control flow"
- PROCEEDINGS IEEE INTERNATIONAL CONFERENCE ON COMPUTER DESIGN: VLSI IN COMPUTERS, Port Chester, New York, 6. - 9. Oktober 1986, Seiten 336-339, IEEE, New York, US; T. NISHIMUKAI et al.: "A high performance 32-bit microprocessor"

## Beschreibung

Die Erfindung betrifft eine Vorrichtung zur Befehlsbereitstellung in einem Mikroprozessor gemäß dem Oberbegriff des Anspruchs 1 bzw. Anspruchs 2.

Die Anforderungen an Mikroprozessoren oder Mikrocontroller steigen mit jeder Entwicklungsgeneration, so daß in heutigen Mikroprozessoren Verarbeitungseinheiten vorgesehen sind, die früher nur in Großrechenanlagen üblich waren. Eine dieser Verarbeitungseinheiten ermöglicht es, Befehle quasi parallel abzuarbeiten. Der Mikroprozessor oder Mikrocontroller enthält hierzu eine sogenannte Pipeline-Architektur. Eine derartige Pipeline-Architektur ist in Elektronik Heft 2, Januar 1990 auf Seite 46 ff beschrieben. Normalerweise werden zur Abarbeitung eines Befehls mehrere Schritte benötigt. In einer Pipeline-Architektur werden diese Schritte in möglichst gleiche Teilschritte aufgeteilt. Jeder Teilschritt kann dann autonom, also unabhängig von den anderen Teilschritten verarbeitet werden. Um einen Befehl vollständig abzuarbeiten, muß er sequentiell alle Teilschritte durchlaufen. Üblicherweise haben Prozessoren drei- bis fünfstufige Pipelines. Nachfolgend wird eine dreistufige Pipeline erläutert:
1. Fetch: Befehl holen. Ein Befehl wird vom internen oder externen Speicher basierend auf der im Programmzähler stehenden Adresse geholt.
2. Decode: Befehl dekodieren. Während dieser Phase werden die benötigten Operanden aus dem internen oder externen Speicher geholt. Weiterhin wird der momentan zu bearbeitende Befehl dekodiert. Daten, die ein vorangegangener Befehl erstellt hat, werden ebenfalls dem zu verarbeitenden Befehl zugestellt.
3. Execute: Befehl ausführen. Unter Berücksichtigung der Signale, die während der Dekodierphase erzeugt wurden, führen die arithmetische Logikeinheit oder andere Ausführungseinheiten (z.B. Shifter oder Multiplizierer) die gewünschte Berechnung durch. Während der zweiten Phase dieser Stufe wird das Resultat zurück in den internen oder externen Speicher geschrieben.

Jede der oben genannten Stufen könnte selbstverständlich noch in weitere Teilstufen zergliedert werden. Bei der Abarbeitung von aufeinanderfolgenden Befehlen wird die Pipeline im Fließbandverfahren von Taktzyklus zu Taktzyklus gefüllt. Ist die Pipeline einmal vollständig gefüllt, so wird für die Abarbeitung eines Befehls quasi nur noch ein Taktzyklus benötigt. Dies gilt selbstverständlich nur bei Abarbeitung entsprechend langer Programme. Die oben erläuterte dreistufige Pipeline ermöglicht es also, gegenüber bisherigen Mikroprozessoren Befehle dreimal so schnell auszuführen. Diese Leistungssteigerung wird natürlich nur dann erreicht, wenn die Befehle sequentiell aufeinander folgen. Tritt während der Befehlsabarbeitung ein Sprungbefehl auf, so wird der Fluß durch die Pipeline unterbrochen, da die Adresse des als nächstes zu bearbeitenden Befehls erst während der Dekodierphase ermittelt werden kann. Da Sprungbefehle in vielen Anwendungen einen großen Teil der ausgeführten Befehle eines Mikroprozessors oder Mikrocontrollers darstellen, vor allem bei Programmschleifen, kann die Leistungssteigerung um den Faktor 3 nicht immer während des Programmablaufs gewährleistet werden.

Eine bisherige Lösung dieses Problems ist das sogenannte "delayed branching". Dabei wird beim Auftreten eines Sprungbefehls immer ein sogenannter "no operation"-Befehl NOP angefügt. Durch das verzögerte Bearbeiten des eigentlichen Sprungzielbefehls wird immer der richtige Zielbefehl geladen, da genügend Zeit vorhanden ist, die Zieladresse zu berechnen. Nachteilig ist, daß beim Auftreten von Sprungbefehlen grundsätzlich ein Zyklus verloren geht. Anstelle des "no operation"-Befehls kann unter Umständen auch ein anderer im Programmablauf stehender Befehl vorgezogen werden. Dieser Befehl darf aber keinen Einfluß auf den Sprungbefehl haben und muß bestimmten Bedingungen genügen, die die Auswahl eines solchen Befehls stark einschränken.

Im EP-A-0 135 844 wird eine Vorrichtung beschrieben, die die im Oberbegriff der Ansprüche 1 bzw. 2 beschriebenen Merkmale beinhaltet. EP-A-0 135 844 zeigt außerdem, daß mehrere Sprungzielfolgebefehle zwischengespeichert werden.

Aufgabe der Erfindung ist es daher, eine Vorrichtung zur Befehlsbereitstellung in einem Mikroprozessor mit mehrstufiger Pipelineverarbeitungseinheit anzugeben, die es ermöglicht, Sprungbefehle in Schleifen mit möglichst geringem Geschwindigkeitsverlust zu verarbeiten.

Die Aufgabe wird gelöst durch die kennzeichnenden Teile der Ansprüche 1 bzw. 2 gelöst.

Weiterbildungen sind Kennzeichen der Unteransprüche.

Vorteil der Erfindung ist, daß ein Mikroprozessor oder Mikrocontroller mit Pipeline-Architektur auch bei Programmschleifen mit bedingten Sprungbefehlen gegenüber herkömmlichen Systemen mit Pipeline-Architektur kaum Geschwindigkeitsverlust erleidet. Es erfolgt kein "delayed branching". Dies gilt allerdings nur für Sprungbefehle, deren Sprungadresse statisch ist. Das heißt, die durch den Sprungbefehl bestimmte Zieladresse darf sich während des Programmablaufs nicht ändern. Derartige statische Sprungbefehle stellen allerdings auch den größten Teil des Sprungbefehlsatzes eines Mikroprozessors dar. Erreicht wird dies auf einfache Weise durch Zwischenspeicherung der Sprungbefehladresse oder der Sprungzieladresse und des Sprungzielbefehls mittels einfacher Speichereinheiten für Adresse und Datum und entsprechender Control-Logik. Vorteilhafterweise werden nur die Adresse des Sprungbefehls, der Zielbefehl, d. h. der unter der Sprungadresse abgespeicherte Befehl, und die Sprungzielfolgeadresse abgespeichert. Bei entsprechend schnellen Verarbeitungseinheiten, insbesondere der arithmetischen Logikeinheit, kann statt der Sprungbefehlsadresse auch die Sprungzieladresse zwischengespeichert werden.

Tritt eine Übereinstimmung der Adresse eines Sprungbefehls bzw. der Sprungzieladresse mit einer in der Speichereinheit gespeicherten Adresse auf und sind die entsprechenden Flags zur Programmverzweigung durch den vorangegangenen Befehl gesetzt, so werden der Zielbefehl und die Sprungzielfolgeadresse den entsprechenden Pipelinestufen übergeben. Hierfür ist genügend Bearbeitungszeit innerhalb eines Zyklus vorgesehen, da die Adresse des Sprungbefehls sofort, also bei Beginn eines Zykluses verglichen werden kann, bzw. da die Sprungzieladresse entsprechend schnell ermittelt werden kann. Je nach Größe der Pipeline müssen zusätzliche Speichereinheiten zum Speichern zu verarbeitender Daten vorgesehen werden, damit die vorgelagerten Pipelinestufen bei einem Sprung mit den richten Daten versorgt werden.

Ein weiterer Vorteil ist, daß jeder beliebige Befehl einem Sprungbefehl nachfolgen kann und die Zieladresse beliebig im internen oder externen ROM oder RAM befindlich sein kann.

Die Erfindung wird nachfolgend anhand von drei Figuren näher erläutert.
Es zeigen
- FIG 1: ein Blockschaltbild einer ersten erfindungsgemäßen Vorrichtung zur Befehlsbereitstellung in einem Mikroprozessor,
- FIG 2: eine Tabelle, die den Ablauf einer Programmschleife in einer erfindungsgemäßen mehrstufigen Pipeline-architektur zeigt.
- FIG 3: einen Ausschnitt aus einem Blockschaltbild einer zweiten erfindungsgemäßen Vorrichtung zur Befehlsbereitstellung in einem Mikroprozessor.

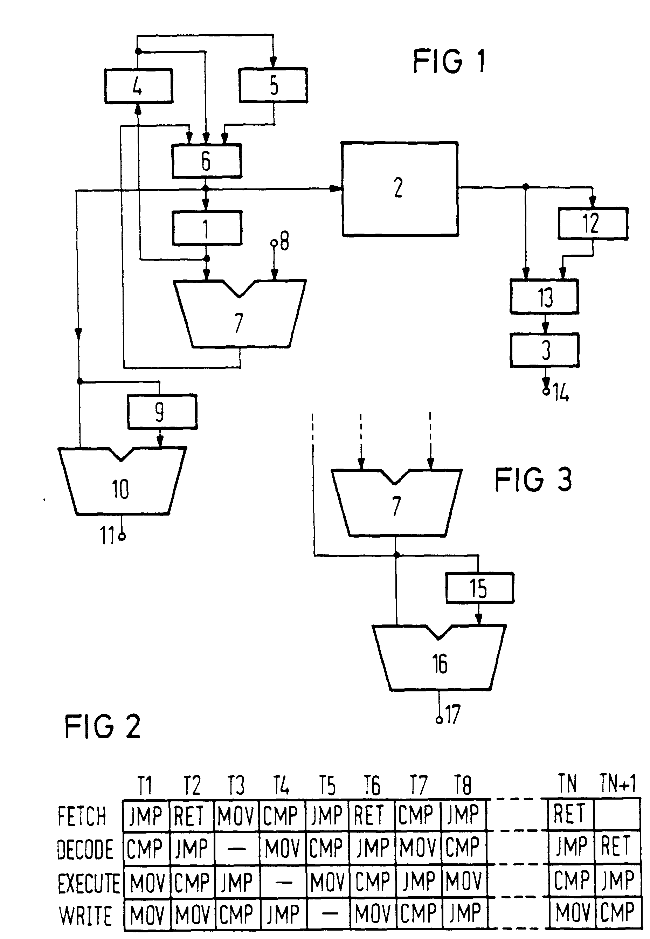

Die für die Befehlsbereitstellung in der Pipelinestufe Fetch in einem Mikroprozessor oder Mikrocontroller wesentlichen Komponenten sind in FIG 1 dargestellt. Der Inhalt des Programmzählers 1 wird zum einen einer arithmetischen Logikeinheit 7 und zum anderen einer Inkrementiereinheit 4 zugeführt. Die Ausgangsdaten der Inkrementiereinheit 4 werden einer Speichereinheit 5 zugeführt. Diese Speichereinheit dient zur Speicherung der Sprungziel-Folgeadresse. Ein Multiplexer 6 ist vorgesehen, dessen Eingängen die Ausgangsdaten der arithmetischen Logikeinheit 7, die Ausgangsdaten der Inkrementierstufe und die Ausgangsdaten der Speichereinheit 5 zur Speicherung der übernächsten Folgeadresse bei Auftreten eines Sprungbefehls zugeführt werden. Der Ausgang des Multiplexers 6 ist zum einen mit dem Eingang des Programmzählers 1 und zum anderen mit dem Programmspeicher 2 verbunden. Am zweiten Eingang 8 der arithmetischen Logikeinheit 7 liegt der Programmzähler-Offset (bei relativen Sprüngen) bzw. die absolute Sprungzieladresse, die von der Dekodierstufe geliefert werden, an. Der Ausgang der Multiplexers 6 ist weiterhin zum einen mit dem ersten Eingang eines Adresskomparators 10 und zum anderen über eine Speichereinheit 9 mit dem zweiten Eingang des Adresskomparators 10 verbunden. Der Ausgang des Adresskomparators 10 liefert ein Signal, das die Übereinstimmung der vom Multiplexer 6 gelieferten Adresse und der in der Speichereinheit 9 abgespeicherten Adresse angibt. Der Befehlsspeicher 2 weist einen Datenausgang auf, an dem die adressierten Daten anliegen. Der Ausgang ist mit einem Multiplexer 13 und mit einer weiteren Speichereinheit 12 verbunden. Der Ausgang dieser Speichereinheit 12 ist mit dem zweiten Eingang des Multiplexers 13 verschaltet. Der Ausgang des Multiplexers 13 ist mit dem Instruktionsregister 3 verbunden. Am Ausgang 14 des Instruktionsregister 3 kann der für die Dekodierstufe notwendige Befehl abgegriffen werden.

Die für die Steuerung der Multiplexer 6, 13 sowie des Komparators 10 und der arithmetischen Steuereinheit usw. notwendigen Signalleitungen sind aus Übersichtlichkeitsgründen nicht in die FIG 1 mit aufgenommen.

Zur Befehlsbereitstellung wird im Normalbetrieb die im Programmzähler 1 befindliche Adresse in der Inkrementierstufe 4 um die jeweilige Befehlslänge erhöht, so daß die in der Inkremtierstufe 4 stehende Adresse auf den direkt im Programmspeicher 2 nachfolgenden Befehl zeigt. Diese Adresse wird über den Multiplexer 6 bei linear aufeinanderfolgenden Befehlen ausgewählt und im Programmzähler abgespeichert. Außerdem wird mit dieser Adresse der Programmspeicher 2 adressiert. Der zugehörige Befehl wird dann über den Multiplexer 13 in das Instruktionsregister 3 übernommen und der in der Pipeline nachfolgenden Dekodierstufe übergeben.

Wird in der Dekodierstufe ein Sprungbefehl mit statischer Sprungadresse erkannt, so kommt es zu folgendem Ablauf:

Es wird überprüft, ob dieser Sprungbefehl bereits vorher schon bearbeitet wurde. Dazu wird die Adresse des Sprungbefehls durch den Komparator 10 mit dem Inhalt der Speichereinheit 9 verglichen. Es kommt zu zwei Zuständen, wenn die Sprungbedingungen erfüllt sind:
a) Bei fehlender Übereinstimmung wird die Sprungzieladresse durch die arithmetische Logikeinheit 7 errechnet und dem Multiplexer 6 zugeführt. Die Sprungbefehlsadresse wird in der Speichereinheit 9 abgespeichert. Der dem Sprungbefehl linear folgende Befehl wird aus dem Instruktionsregister gelöscht oder durch einen sogenannten "No operation"-Befehl NOP ersetzt. Im nachfolgenden Zyklus wird dann die neu berechnete Sprungzieladresse durch den Multiplexer 6 ausgewählt. Die neu berechnete Adresse wird im Programmzähler abgespeichert und wiederum in der Inkrementierstufe 4 erhöht. Diese Sprungzielfolgeadresse wird dann in der Speichereinheit 5 abgespeichert. Die vom Multiplexer 6 ausgewählte Adresse wird dem Programmspeicher 2 zugeführt und der dadurch adressierte Befehl wird sowohl über den Multiplexer 13 dem Instrukionsregister 3 zugeführt als auch in der Speichereinheit 12 abgespeichert.
b) Bei Übereinstimmung wird der in der Speichereinheit 12 stehende Befehl über den Multiplexer 13 der Dekodierstufe übergeben. Der zuvor in der Befehlsbereitstellungsstufe Fetch ermittelte lineare Folgebefehl wird dadurch gelöscht. Die Befehlsbereitsstellungsstufe wählt dann über den Multiplexer 6 die Sprungzielfolgeadresse, die in der Speichereinheit 5 abgespeichert wurde, aus und führt sie dem Programmzähler und dem Programmspeicher in bekannter Weise zu.

Bei allen anderen Sprungbefehlen, d. h. Sprungbefehlen mit dynamischen Sprungadressen, folgt ein Ablauf der Pipelineverarbeitung im üblichen Sinne, d. h. es muß ein "no operation"-Befehl eingefügt werden bzw. ein Zyklus innerhalb der Pipelineverarbeitung geht verloren.

Sind die Sprungbedingungen nicht erfüllt, so erfolgt ein normaler sequentieller Programmablauf, wie es vorstehend in der Befehlsbereitstellung im Normalbetrieb erläutert ist.

Die Bereitstellung der Sprungzielfolgeadresse könnte auch dadurch erfolgen, daß die Sprungzieladresse aus dem Ausgang der arithmetischen Logikeinheit 7 direkt der Inkrementierstufe 4 z.B. über einen Multiplexer zugeführt wird. Das Register 5 könnte dann entfallen. Wesentlich ist, daß bei Adressübereinstimmung am Komparator 10 die Befehlsbereitstellungsstufe Fetch der Pipeline die Sprungzielfolgeadresse bereitgestellt bekommt.

Der Abgriff der Vergleichsadresse für den Komparator 10 könnte auch nach der Inkrementierstufe 4 oder nach dem Programmzähler 1 erfolgen. Wesentlich ist hier das Timing. Der Vergleich muß möglichst früh nach Detektion des Sprungbefehls erfolgen, um genügend Zeit für die nachfolgenden Operationen zu haben.

Das beschriebene Verfahren wird durch die interne Ablaufsteuerung des Mikrocontrollers nach jedem Rücksetzvorgang erst nach der Ausführung des ersten Sprungbefehls freigegeben, da vorher der Inhalt der Speichereinheit 9 undefiniert ist.

Der genaue Ablauf wird anhand von FIG 2 und einem kleinen Demonstrationsgrogramm näher erläutert. Das Demonstrationsprogramm lautet:

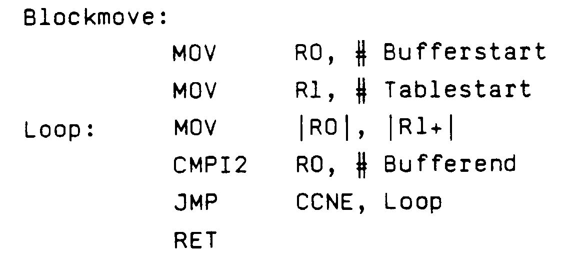

Das Demonstrationsprogramm verdeutlicht den Ablauf innerhalb der Pipeline-Architektur bei Durchlauf einer Programmschleife. Das Programm ermöglicht es dabei, einen Datenblock von einer Quell-adresse nach einer Zieladresse zu kopieren. Die ersten beiden Befehle MOV laden die Quell- und die Zieladresse in die Register R0 und R1. Der erste Befehl der Schleife MOV kopiert den Inhalt der Speicherzelle auf die R1 zeigt, in die Speicherzelle, auf die R0 zeigt, und inkrementiert anschließend das Register R1. Der nächste Befehl CMPI2 vergleicht den Inhalt des Registers R0 mit der Endadresse des zu transferierenden Blocks und inkrementiert das Register R0. Es folgt der Sprungbefehl JMP zum Anfang der Schleife. Solange R0 ungleich der Blockendeadresse ist, wird die Schleife wiederholt. Abschließend folgt ein Rücksprungbefehl RET.

FIG 2 verdeutlicht den Ablauf innerhalb der Pipeline. Mit T1 bis TN+1 sind einzelne aufeinanderfolgende Taktzyklen des Prozessors gekennzeichnet. Mit Fetch, Decode, Execute, Write sind die einzelnen Stufen einer vierstufigen Pipeline bezeichnet. Zum Zeitpunkt T1 ist die Pipeline bereits vollständig geladen. Der erste Befehl MOV R0, # Bufferstart des Demonstrationsprogramms ist bereits abgearbeitet. Der zweite Befehl MOV R1, # Tablestart befindet sich in der vierten Pipelinestufe Write. Der dritte Befehl MOV |R0|, |R1+| befindet sich in der Ausführungsphase Execute, der vierte Befehl CMPIZ R0, # Bufferend in der Dekodierphase Decode und der fünfte Befehl JMP CCNE, Loop in der Lade-phase Fetch. Zum Zeitpunkt T2 verschiebt sich der Inhalt der Pipeline um eine Stufe, so daß der Sprungbefehl JMP sich nun in der Dekodierstufe befindet und der dem Sprungbefehl JMP nachfolgende Befehl RET wird aus dem Speicher geholt, da zu diesem Zeitpunkt der Komparator 10 keine Übereinstimmung zwischen dem Inhalt der Speichereinheit 9 und der vom Multiplexer 6 ausgewählten Adresse ermittelt. Zum Zeitpunkt T3 verschiebt sich wiederum der Inhalt der Pipeline um eine Stufe. Durch die fehlende Übereinstimmung der ermittelten Adressen wird der sich nun in der Dekodierphase Decode befindliche Befehl RET gelöscht und der unter der während der Dekodierphase zum Zeitpunkt T2 ermittelten Adresse stehende Befehl in das Instruktionsregister 3 geladen.

Die Sprungbefehlsadresse und der zugehörige Sprungzielbefehl werden nun in den entsprechenden Speichereinheiten 9, 12 zwischengespeichert. Außerdem wird die inkrementierte Sprungzieladresse in der Speichereinheit 5 abgespeichert. Bis zum Zeitpunkt T5 erfolgt nun eine normale Abarbeitung der Pipeline. Im Zeitpunkt T5 wird wiederum der Sprungbefehl JMP dekodiert. Nun stimmt aber die durch den Multiplexer 6 ausgewählte Adresse mit dem Inhalt der Speichereinheit 9 überein. Dadurch wird in der nachfolgenden Bearbeitungsphase T6 der unter der Sprungzieladresse stehende Befehl, der ja bereits in der Speichereinheit 12 abgespeichert ist, direkt der Dekodierstufe Decode übergeben. Die Ladestufe Fetch erhält die in der Speichereinheit 5 stehende Folgeadresse der Sprungzieladresse. Auf diese Weise wird nun für den Rest der Schleifendurchläufe kein Zyklus mehr verloren. Zuletzt folgt in den Zyklen TN und folgenden die Abarbeitung des Rücksprungbefehls RET.

Die Größe der Speichereinheiten 5, 9, 12 muß derart gewählt werden, daß mindestens der jeweilige Befehl bzw. die jeweiligen Adressen gespeichert werden können. Werden mehrere Komparatoren 10 und zugehörige Speichereinheiten 9 jeweils parallel geschaltet, so können mehrere Adressen von Sprungbefehlen, z. B. in verschachtelten Programmschleifen, zwischengespeichert werden. Desgleichen sind dann mehrere Speichereinheiten 5 und 12 vorzusehen um die jeweils zugehörigen Sprungzielbefehle bzw. Sprungzielfolgeadressen zu speichern.

Werden die Speichereinheiten 5, 9, 12 größer als der abzuspeichernde Befehl gewählt, so besteht die Möglichkeit bei genügend schnellem Speicher mehrere Folgebefehle und Adressen abzuspeichern.

Eine weitere Möglichkeit, festzustellen, ob ein Sprungbefehl bereits ausgeführt wurde, besteht darin, nicht die Adresse des Sprungbefehls zwischenzuspeichern, sondern die Sprungzieladresse und sie später mit im Programm auftretenden Sprungzieladressen zu vergleichen.

In FIG 3 ist nur der gegenüber FIG 1 veränderte Teil eines erfindungsgemäßen Blockschaltbilds zur Befehlsbereitstellung dargestellt. Entsprechend FIG 1 werden Ein- und Ausgangssignale einer arithmetischen Logikeinheit 7 zugeführt.

Der Ausgang der arithmetischen Logikeinheit 7 ist zum einen mit dem ersten Eingang eines Adresskomparators 16 und zum anderen über eine Speichereinheit 15 mit dem zweiten Eingang des Adresskomparators 16 verbunden. Der Ausgang 17 des Adresskomparators 16 liefert ein Signal, das die Übereinstimmung des von der arithmetischen Logikeinheit 7 berechneten Adresse und der in der Speichereinheit 15 abgespeicherten Adresse angibt.

Im Normalbetrieb wird die von der Inkrementierstufe gelieferte Adresse über den Multiplexer 6 den Adresseingängen des Programmspeichers 2 zugeführt. Der entsprechende Befehl wird dann im Instruktionsregister 3 abgespeichert und der in der Pipeline nachfolgenden Dekodierstufe zugeführt. Dabei erhöht die Inkrementierstufe 4 den Zählerstand des Programmzählers 1 jeweils um die Befehlslänge, die der im Programmzähler 1 stehende Befehl hat.

Wird ein Sprungbefehl erkannt, so berechnet die arithmetische Logikeinheit 7 die entsprechende Adresse und übergibt sie an den Multiplexer 6. Der der arithmetischen Logikeinheit 7 nachfolgend geschaltete Adresskomparator 16 vergleicht die berechnete Adresse mit der in der Speichereinheit 15 abgespeicherten Adresse. Bei fehlender Übereinstimmung des Inhalts der Speichereinheit 15 mit der durch die arithmetische Logikeinheit 7 berechneten Adresse wird die von der arithmetischen Logikeinheit 7 berechnete Adresse über den Multiplexer 6 an die Adresseingänge des Befehlsspeichers 2 übergeben. Außerdem wird die berechnete Adresse durch die Inkrementierstufe 4 um die jeweilige Befehlslänge inkrementiert und in der Speichereinheit 5 abgespeichert. Der jeweils im Programmspeicher 2 adressierte Befehl wird dann in der Speichereinheit 12 abgespeichert und wiederum in das Instruktionsregister 3 übernommen und der nachfolgenden Dekodierstufe übergeben. Außerdem wird der zuvor der Dekodierstufe übergebene Befehl gelöscht oder durch einen NOP-Befehl ersetzt. Bei Übereinstimmung wird der bereits zuvor in der Speichereinheit 12 abgespeicherte zugehörige Befehl über den Multiplexer 13 in das Instruktionsregister 3 geladen und nachfolgend der Dekodierstufe übergeben. Außerdem wird bei Übereinstimmung die im Register 5 inkrementierte Sprungzieladresse über den Multiplexer 6 an die Adresseingänge des Befehlsspeichers 2 übergeben.

Die Bereitstellung der Sprungzielfolgeadresse könnte auch gemäß der zu FIG 1 vorliegenden Variation erfolgen.

Auch in dem durch FIG 3 gezeigten Ausführungsbeispiel können mehrere Komparatoren 16 und zugehörige Speichereinheiten 15 jeweils parallel geschaltet werden, wie dies auch bezüglich FIG 1 beschrieben ist.

Die Erfindung ist in allen Microprozessoren oder Microcontrollern mit Pipeline-Architektur anwendbar.

## Patentansprüche

1. Vorrichtung zur Befehlsbereitstellung in einem Mikroprozessor mit mehrstufiger Pipeline-Verarbeitungseinheit, deren Verarbeitung mindestens aus einer "Befehl holen"-Phase, "Befehl decodieren"-Phase und einer "Befehl ausführen"-Phase besteht,
- mit einem Adreßregister (1), dessen Inhalt auf einen zu verarbeitenden Befehl in einem Speicher (2) zeigt und der zu verarbeitende Befehl während der "Befehl holen"-Phase in ein zugehöriges Befehlsregister (3) geladen wird,
- mit einer arithmetischen Recheneinheit (7) zur Berechnung von Adressen,
- mit Mitteln (4) zum Inkrementieren des Inhalts des Adreßregisters (1),
- mit einem Multiplexer (6) zur Auswahl der berechneten oder der inkrementierten Adressen,
- mit mindestens einer ersten Speichereinheit (9) zur Zwischenspeicherung einer Sprungbefehlsadresse, wobei die Sprungzielbefehlsadresse bei Auftreten eines Sprungbefehls und bei Vorhandensein der entsprechenden Sprungbedingungen ermittelt wird,
- mit mindestens einer der ersten Speichereinheit (9) zugehörigen zweiten Speichereinheit (12) zur Speicherung des der Sprungzielbefehlsadresse zugehörigen Sprungzielbefehls,
- mit mindestens einem Adreßvergleicher (10), der bei Übereinstimmung der Sprungbefehlsadresse mit dem Inhalt der ersten Speichereinheit (9) und bei Vorhandensein der entsprechenden Sprungbedingungen ein Freigabesignal (11) erzeugt,
dadurch gekennzeichnet, daß
- mindestens eine dritte Speichereinheit (5) zur Speicherung der der inkrementierten Sprungzielbefehlsadresse entsprechenden Sprungzielfolgeadresse vorgesehen ist und diese Sprungzielfolgeadresse dem Multiplexer (6) zugeführt wird,
- wobei das Freigabesignal (11) das Befehlsregister (3) veranlaßt, den in der zweiten Speichereinheit (12) stehenden Befehl zu laden, und den Multiplexer (6) veranlaßt, die in der dritten Speichereinheit (5) stehende Sprungzielfolgeadresse auszuwählen.

2. Vorrichtung zur Befehlsbereitstellung in einem Mikroprozessor mit mehrstufiger Pipeline-Verarbeitungseinheit, deren Verarbeitung mindestens aus einer "Befehl holen"-Phase, "Befehl decodieren"-Phase und einer "Befehl ausführen"-Phase besteht,
- mit einem Adreßregister (1), dessen Inhalt auf einen zu verarbeitenden Befehl in einem Speicher (2) zeigt und der zu verarbeitende Befehl während der "Befehl holen"-Phase in ein zugehöriges Befehlsregister (3) geladen wird,
- mit einer arithmetischen Recheneinheit (7) zur Berechnung von Adressen,
- mit Mitteln (4) zum Inkrementieren des Inhalts des Adreßregisters (1),
- mit einem Multiplexer (6) zur Auswahl der berechneten oder der inkrementierten Adressen,
- mit mindestens einer ersten zusätzlichen Speichereinheit (15) zur Zwischenspeicherung einer Sprungbefehlsadresse wobei die Sprungzielbefehlsadresse bei Auftreten eines Sprungbefehls ermittelt wird,
- mit mindestens einer der ersten zusätzlichen Speichereinheit (15) zugehörigen zweiten Speichereinheit (12) zur Speicherung des der Sprungzielbefehlsadresse zugehörigen Sprungzielbefehls
- mit mindestens einem zusätzlichen Adreßvergleicher (16) der bei Übereinstimmung der Sprungbefehlsadresse mit dem Inhalt der ersten zusätzlichen Speichereinheit (15) ein zusätzliches Freigabesignal (17) erzeugt,
**dadurch gekennzeichnet,** daß
- mindestens eine dritte Speichereinheit (5) zur Speicherung der der inkrementierten Sprungzielbefehlsadresse entsprechenden Sprungzielfolgeadresse vorgesehen ist und diese Sprungzielfolgeadresse dem Multiplexer (6) zugeführt wird,
- wobei das zusätzliche Freigabesignal (17) das Befehlsregister (3) veranlaßt, den in der zweiten Speichereinheit (12) stehenden Befehl zu laden, und den Multiplexer (6) veranlaßt, die in der dritten Speichereinheit (5) stehende Sprungzielfolgeadresse auszuwählen.

3. Vorrichtung zur Befehlsbereitstellung in einem Mikroprozessor nach einem der vorhergehenden Ansprüchen,
**dadurch gekennzeichnet,**
daß der Speicher (2) innerhalb oder außerhalb des Mikroprozessors angeordnet sein kann.

4. Vorrichtung zur Befehlsbereitstellung in einem Mikroprozessor nach einem der vorhergehenden Ansprüchen,
**dadurch gekennzeichnet,**
daß der Speicher (2) ein Lesespeicher oder ein Schreib-/Lesespeicher sein kann.

## Claims

1. Device for providing instructions in a microprocessor with a multi-stage pipeline processing unit, the processing of which consists at least of a "search instruction" phase, "decode instruction" phase and an "execute instruction" phase,
- comprising an address register (1), the content of which points to an instruction, to be processed, in a memory (2) and the instruction to be processed is loaded into an associated instruction register (3) during the "search instruction" phase,
- comprising an arithmetic and logic unit (7) for calculating addresses,
- comprising means (4) for incrementing the content of the address register (1),
- comprising a multiplexer (6) for selecting the calculated addresses or the incremented addresses,
- comprising at least a first storage unit (9) for temporarily storing a jump instruction address, the jump destination instruction address being determined on account of a jump instruction and in the presence of the corresponding jump conditions,
- comprising at least a second storage unit (12), which belongs to the first storage unit (9), for storing the jump destination instruction belonging to the jump destination instruction address,
- comprising at least one address comparator (10) which, on correspondence of the jump instruction address with the contents of the first storage unit (9) and in the presence of the corresponding jump conditions, generates an enable signal (11), characterized in that
- at least a third storage unit (5) is provided for storing the jump destination link address corresponding to the incremented jump destination instruction address and this jump destination link address is supplied to the multiplexer (6),
- wherein the enable signal (11) causes the instruction register (3) to load the instruction located in the second storage unit (12) and causes the multiplexer (6) to select the jump destination link address located in the third storage unit (5).

2. Device for providing instructions in a microprocessor with a multi-stage pipeline processing unit, the processing of which consists at least of a "search instruction" phase, "decode instruction" phase and an "execute instruction" phase,
- comprising an address register (1), the content of which points to an instruction, to be processed, in a memory (2) and the instruction to be processed is loaded into an associated instruction register (3) during the "search instruction" phase,
- comprising an arithmetic and logic unit (7) for calculating addresses,
- comprising means (4) for incrementing the contents of the address register (1),
- comprising a multiplexer (6) for selecting the calculated addresses or the incremented addresses,
- comprising at least a first additional storage unit (15) for temporarily storing a jump instruction address, the jump destination instruction address being determined on account of a jump instruction,
- comprising at least a second storage unit (12), which belongs to the first additional storage unit (15), for storing the jump destination instruction belonging to the jump destination instruction address,
- comprising at least an additional address comparator (16), which, on correspondence of the jump instruction address with the contents of the first additional storage unit (15), generates an additional enable signal (17),
characterized in that
- at least a third storage unit (5) is provided for storing the jump destination link address corresponding to the incremented jump destination instruction address and this jump destination link address is supplied to the multiplexer (6),
- wherein the additional enable signal (17) causes the instruction register (3) to load the instruction located in the second storage unit (12) and causes the multiplexer (6) to select the jump destination link address located in the third storage unit (5).

3. Device for providing instructions in a microprocessor according to one of the preceding claims, characterized in that the memory (2) can be arranged internally or externally to the microprocessor.

4. Device for providing instructions in a microprocessor according to one of the preceding claims, characterized in that the memory (2) can be a read-only memory or a read-write memory.

## Revendications

1. Dispositif de mise à disposition d'instructions dans un microprocesseur comportant une unité de traitement du type pipeline multiétagé dont le traitement se compose d'au moins une phase "d'appel d'instruction", d'une phase "de décodage d'instruction" et d'une phase "d'exécution d'instruction",
- comportant un registre d'adresses (1), dont le contenu désigne une instruction à traiter dans une mémoire (2) et l'instruction à traiter est chargée pendant la phase "d'appel d'instruction" dans un registre d'instructions afférent (3),
- comportant une unité de calcul arithmétique (7) pour le calcul des adresses,
- comportant des moyens (4) d'incrémentation du contenu du registre d'adresses (1),
- comportant un multiplexeur (6) pour la sélection des adresses calculées ou incrémentées,
- comportant au moins une première unité de mémoire (9) pour la mise en mémoire temporaire d'une adresse d'instruction de branchement, l'adresse d'instruction de destination de branchement étant déterminée à l'apparition d'une instruction de branchement et en présence des conditions de branchement correspondantes,
- comportant au moins une seconde unité de mémoire (12) appartenant à la première unité de mémoire (9) pour la mémorisation de l'instruction de destination de branchement afférente à l'adresse d'instruction de destination de branchement, caractérisé en ce que au moins une troisième unité de mémoire (5) pour la mémorisation de l'adresse suivante de destination de branchement correspondant à l'adresse d'instruction de destination de branchement incrémentée est prévue et en ce que cette adresse suivante de destination de branchement est amenée au multiplexeur (6),
- comportant au moins un comparateur d'adresses (10), qui, en cas de correspondance de l'adresse d'instruction de branchement avec le contenu de la première unité de mémoire (9) et en présence des conditions de branchement correspondantes génère un signal de validation (11), contraignant le registre d'instructions (3) à charger l'instruction se trouvant dans la seconde unité de mémoire (12) et contraignant le multiplexeur (6) à sélectionner l'adresse suivante de destination de branchement se trouvant dans la troisième unité de mémoire (5).

2. Dispositif de mise à disposition d'instructions dans un microprocesseur comportant une unité de traitement du type pipeline multiétagé dont le traitement se compose d'au moins une phase "d'appel d'instruction", d'une phase "de décodage d'instruction" et d'une phase "d'exécution d'instruction",
- comportant un registre d'adresses (1), dont le contenu désigne une instruction à traiter dans une mémoire (2) et l'instruction à traiter est chargée pendant la phase "d'appel d'instruction" dans un registre d'instructions afférent (3),
- comportant une unité de calcul arithmétique (7) pour le calcul des adresses,
- comportant des moyens (4) d'incrémentation du contenu du registre d'adresses (1),
- comportant un multiplexeur (6) pour la sélection des adresses calculées ou incrémentées,
- comportant au moins une première unité de mémoire (15) supplémentaire pour la mise en mémoire temporaire d'une adresse d'instruction de branchement, l'adresse d'instruction de destination de branchement étant déterminée à l'apparition d'une instruction de branchement,
- comportant au moins une seconde unité de mémoire (12) appartenant à la première unité de mémoire (15) supplémentaire pour la mémorisation de l'instruction de destination de branchement afférente à l'adresse d'instruction de destination de branchement, caractérisé en ce que au moins une troisième unité de mémoire (5) pour la mémorisation de l'adresse suivante de destination de branchement correspondant à l'adresse d'instruction de destination de branchement incrémentée est prévue et en ce que cette adresse suivante de destination de branchement est amenée au multiplexeur (6),
- comportant au moins un comparateur d'adresses (16) supplémentaire, qui, en cas de correspondance de l'adresse d'instruction de branchement avec le contenu de la première unité de mémoire (15) supplémentaire génère un signal de validation (17) supplémentaire,
- le signal de validation supplémentaire (17) contraignant le registre d'instructions (3) à charger l'instruction se trouvant dans la seconde unité de mémoire (12) et contraignant le multiplexeur (6) à sélectionner l'adresse suivante de destination de branchement se trouvant dans la troisième unité de mémoire (5).

3. Dispositif de mise à disposition d'instructions dans un microprocesseur selon l'une des revendications précédentes, caractérisé en ce que la mémoire (2) peut être disposée à l'intérieur ou à l'extérieur du microprocesseur.

4. Dispositif de mise à disposition d'instructions dans un microprocesseur selon l'une des revendications précédentes, caractérisé en ce que la mémoire (2) peut être une mémoire de lecture ou une mémoire d'écriture/lecture.
